# EUROPEAN PATENT APPLICATION

(11) **EP 4 795 918 A1**
(43) Date of publication of application: **26.08.2026**
(21) Application number: 26153099.2
(22) Date of filing: 21.01.2026
(51) Int. Cl.: A01D 41/127, A01D 43/08, G01N 21/359

(54) **A CROP MATERIAL SENSOR**

(30) Priority: 25.02.2025 GB 202502744
(71) Applicant: AGCO International GmbH, 8212 Neuhausen am Rheinfall (CH)
(72) Inventor: LAURSEN, Morten Stigaard, 8930 Randers (DK)
(74) Representative: AGCO Intellectual Property Department

(57) **Abstract**

A crop material sensor arrangement for an agricultural harvesting machine is provided. T arrangement includes first and second sensor units operable for imaging in a first and second optical wavebands, respectively. An optical separator element is provided which is operable for directing light in the first optical waveband in a first direction and directing light in the second optical waveband in a second direction which is angled with respect to the first. The optical separator element is positioned, in use, in an optical path between a sensing region associated with a crop path for crop material processed by the harvesting machine, and the first and second sensor units.

## Description

### CROSS-REFERENCE TO RELATED APPLICATIONS

Not applicable.

### FIELD

Embodiments of the present disclosure relate generally to improvements in and relating to sensors for agricultural harvesting machines.

### BACKGROUND

A harvesting machine such as a combine harvester or forage harvester may work to cut and process crop material in/from an agricultural environment. Typically this includes use of a cutting apparatus such as a header which works to cut growing crop or plant material from a field and transfer this to one or more processing apparatus for processing the crop. This may include further cutting, crimping, or crushing of the crop material, e.g. in the example of a forage harvester, or may include a threshing a separating apparatus in example of a combine harvester to separate grain or kernel material from material other than grain. Processed crop material may subsequently be unloaded from the machine into a support vehicle such as a grain or grass cart, as will be appreciated.

It is known to provide sensing arrangements on such harvesting machines for analysing one or more properties of crop material processed by the machine. This may include an optical sensing system for monitoring a condition of grain-like material (e.g. kernels), which may relate to a level of processing applied to the crop material by the machine, and/or crop disease or other issue identification. Additionally, the optical systems may be used to identify the presence of material other than grain in the collected crop material relating to the yield or efficiency of the harvesting operation. Additionally or alternatively, crop quality or processing sensors may be utilised to monitor a length or quality of cut, for example, of grass-type crops.

Additional sensing arrangements may provide information relating to crop contents, such as a protein content, starch content, sugar content, fiber content, moisture level or like measures. Typically such sensing arrangements may include the use of a near infrared sensor (NIR) for monitoring such properties.

It is an aim of embodiments of the present disclosure to utilise and improve upon these known technologies to provide an improved crop material sensor arrangement.

### BRIEF SUMMARY

An aspect of the disclosure provides a crop material sensor arrangement for an agricultural harvesting machine, the crop material sensor arrangement comprising: a first sensor unit operable for imaging in a first optical waveband; a second sensor unit operable for imaging in a second optical waveband; an optical separator element operable for directing light in the first optical waveband in a first direction and directing light in the second optical waveband in a second direction, where the first and second direction are angled with respect to one another; wherein the optical separator element is positioned, in use, in an optical path between a sensing region associated with a crop path for crop material processed by the harvesting machine, and the first and second sensor units.

Advantageously, the provision of an optical separator separates light in different wavebands in two directions, allowing for light from the crop path to be analysed in two separate wavebands by two different sensors without needing an additional optical path between the sensing region of the position of the crop material sensor arrangement. Specifically, this may lead to realised improvements in packaging of the sensor arrangement on the harvesting machine, which may be particularly important where the sensor arrangement is positioned on or in relation to one or more components of the machine, such as on the unloading spout of a forage harvester. Having a single optical path from the crop path may also minimize the size of any sensing window or aperture between the sensor units and the crop path which may otherwise provide a point of reduced structural integrity for the relevant harvesting machine component.

The first optical waveband may comprise a range of wavelengths corresponding to light in a near infrared light spectrum (NIR). This may include light with a wavelength at or above approximately 700nm, which may include light with a wavelength between approximately 780nm to 2500nm, for example. In such embodiments, the first sensor unit may comprise an infrared sensor, or a multispectral sensor, for example.

The second optical waveband may comprise a range of wavelengths corresponding to light in a visible light spectrum. This may include light with a wavelength between approximately 300nm to 750nm, for example. In such embodiments, the second sensor unit may comprise a camera, such as an RGB camera, for example.

The optical separator element may comprise a mirror.

The optical separator element may comprise an optical element which is transmissive to light in the first optical waveband and reflective for light in the second optical waveband. In such embodiments, the optical separator may comprise a cold-mirror.

The optical separator element may comprise an optical element which is transmissive to light in the second optical waveband and reflective for light in the first optical waveband. In such embodiments, the optical separator may comprise a hot-mirror.

The optical separator element may have an optical response to incident light (e.g. reflection vs transmission) in dependence on the angle of incidence of the incident light. The sensor arrangement may be configured such that the first and second sensor units, and hence the first and second directions are angled with respect to one another to account for the variable optical response of the optical separator element.

The sensor arrangement may comprise a sensor window. The sensor window may be positioned, in use, in an optical path between the sensing region and the optical separator. The sensor window may be transmissive to light in both the first and second optical wavebands.

The optical separator element may be angled with respect to an orientation of the first and/or second sensor unit. The orientation of the first and/or second sensor unit may be defined by a sensing axis, thereof.

The optical separator element may be angled with respect to an orientation of the sensor window. The orientation of the sensor window may be defined by a major surface thereof.

The angular offset of the optical separator element may be approximately 45 degrees.

The first and second sensor units may be arranged such that respective sensing axes thereof are substantially perpendicular to one another. In such embodiments, the optical separator element may be advantageously angled with respect to said sensing axes at an angle of approximately 45 degrees, such that the first direction is substantially perpendicular to the second direction - i.e. in the direction of respective sensing axes of the first and second sensor units.

The sensor arrangement may comprise a control unit. The control unit may include one or more receiver elements (e.g. an electronic receiver) for receiving sensing signals from the first and/or second sensor units. The control unit may comprise one or controllers (e.g. an electronic processor) for analysing the received sensing signal(s).

The control unit may be operable, in use, to analyse the received sensing signal(s) for determining one or more crop properties therefrom. This may include a first crop property determined from sensing signals from the first sensor unit, and/or a second crop property determined from sensing signals from the second sensor unit.

Where the first sensor unit comprises an infrared sensor or multispectral sensor, the first crop property may include any one or more of: a measure of a moisture content, dry matter content, protein content, starch content, sugar content and/or fiber content, for example.

Where the second sensor unit comprises a camera, the second crop property may comprise a measure of a structural property of the crop material. Which may include a measure of a shape, size, length or the like of one or more crop material pieces. The second crop property may comprise a measure of a colour of the crop material. Sensor data from the second sensing unit may be able to be analysed, e.g. by the one or more controllers of the control unit, for identifying or classifying material components within the crop material, as will be appreciated.

The control unit may be operable, in use, to associate sensing signals from the first and second sensor units. This may include associating the sensing signals based on a timing thereof to, for example, associate a first crop property determined from the sensing signals from the first sensor unit with a second crop property determined from the sensing signals from the second sensor unit.

The one or more controllers may collectively comprise an input (e.g. an electronic input) for receiving one or more input signals. The one or more input signals may comprise sensor data or signals from the first and/or second sensor unit. The one or more controllers may collectively comprise one or more processors (e.g. electronic processors) operable to execute computer readable instructions for controlling operation of the control unit, for example, to determine one or more crop properties from the sensor data. The one or more controllers may collectively comprise an output (e.g. an electronic output) for outputting one or more control signals, e.g. which may be indicative of sensed crop properties and/or for controlling operation of one or more operational components of the harvesting machine in dependence thereon.

A further aspect of the disclosure provides an agricultural harvesting machine comprising the crop material sensor arrangement of the preceding aspect(s).

The crop sensor arrangement, or one or more components thereof may be operably mounted to one or more components of the harvesting machine.

In embodiments, the agricultural harvesting machine comprises a forage harvester, and the crop sensor arrangement (or one or more components thereof) may be operably mounted to an unloading spout of the forage harvester. In other embodiments, the agricultural harvesting machine may comprise a baler, and the crop sensor arrangement (or one or more components thereof) may be operably mounted in relation to a baling chamber thereof, or in relation to a feeder element of the baler. In yet further embodiments the agricultural harvesting machine may comprise a windrower, and the crop sensor arrangement (or one or more components thereof) may be operably mounted in relation to a crop pickup or conditioner of the windrower.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified cross-sectional side view illustrating an agricultural harvesting machine embodiment aspects of the present disclosure;
FIG. 2 is a schematic diagram illustrating an embodiment of a sensor assembly of the present disclosure; and
FIG. 3 illustrates graphically an optical response of hot and cold mirrors providing context for the sensor arrangement described herein.

### DETAILED DESCRIPTION

The present disclosure relates to a crop material sensor arrangement 24 for an agricultural harvesting machine, here in the form of a forage harvester 2. The sensor arrangement includes first and second sensor units 32, 34 operable for imaging in a first and second optical wavebands, respectively. An optical separator element, here in the form of a mirror 36 provided in an optical path between a sensing region associated with a crop path 38 for crop material 40 processed by the forage harvester 2 and the sensor units 32, 34. As discussed herein, the mirror 36 is operable for directing light in the first optical waveband in a first direction and directing light in the second optical waveband in a second direction which is angled with respect to the first. Sensor data from the first and second sensor units may be utilised, as will be appreciated, for determining or measuring one or more crop properties associated with the crop material.

### Harvester

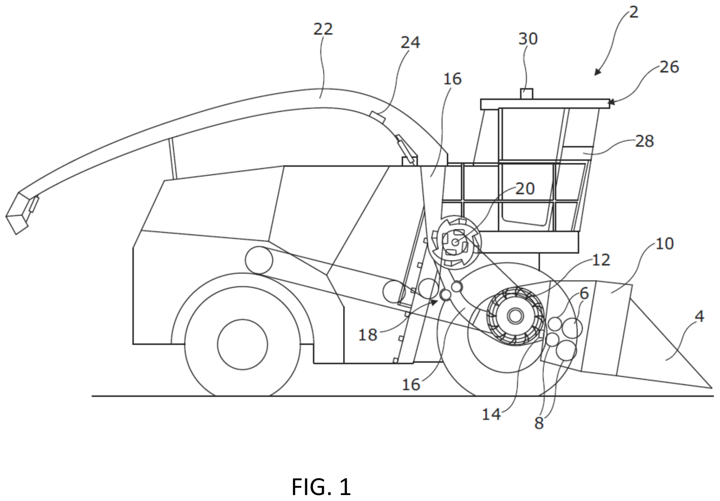

FIG 1 illustrates an agricultural harvesting machine in the form of a forage harvester 2. The forage harvester 2 is provided with a front attachment, here a header 4 comprising cutting equipment for cutting and harvesting a crop from a working environment. The cut crop is fed from the header 4 via associated feed rollers 6, 8 in a housing 10 to a chopper drum 12 where the crop is chopped into smaller pieces between the chopper drum 12 and an associated shear bar 14. The chopped crop passes through a duct 16 and is optionally directed into a cracker unit 18 where the crop is further crushed and threshed. The chopper drum 12, shear bar 14, cracker unit 18 and other associated components may herein be referred to collectively as the crop processing apparatus of the forage harvester 2. The harvested crop is then blown upwards along the duct 16 by an accelerator 20 and exits through a spout 22 directing the processed crop into a trailer or other vehicle moving alongside the forage harvester 2, as will be appreciated.

The forage harvester 2 is further provided with an operator's cab 26. A user interface in the form of a display terminal 28 is located within the operator's cab 26 to communicate information to the operator regarding the operation of the forage harvester 2. In alternative embodiments, a user interface may instead be provided on a portable electronic device carried by the operator, such as a smart phone or tablet computer utilising application software stored or otherwise accessible by the remote user device. The user interface(s) may be used, for example, to provide a graphical representation of one or more crop properties determinable through analysis of sensor data from the first and/or second sensor units 32, 34, as will be appreciated.

### Sensor Arrangement

As discussed herein, the present disclosure relates to the provision of a sensor arrangement 24 operably mounted to the harvesting machine for monitoring crop material processed thereby. In the illustrated embodiment, the sensor arrangement is provided mounted to an unloading spout 22 of the forage harvester 2, positioned for sensing crop material passing therethrough.

The sensor arrangement 24 comprises a first sensor unit 32 operable for imaging in a first optical waveband. Specifically here the first optical waveband comprises a range of wavelengths corresponding to light in a near infrared light spectrum (NIR), which typically includes light with a wavelength between approximately 780nm to 2500nm, for example. The first sensor unit 32 therefore, in the illustrated embodiment, comprises an NIR sensor operable to monitor a spectroscopic response to measurement signals transmitted by a transmitting element of the sensor unit 32. The spectroscopic response is indicative of a crop property which may include a crop content measure of one or more crop components in the crop flow, which can include for example a dry matter content, fiber, protein, fat, ash content and/or sugar content.

The sensor arrangement 24 additionally comprises a second sensor unit 34 operable for imaging in a second optical waveband. The second optical waveband comprises a range of wavelengths corresponding to light in a visible light spectrum, with a wavelength between approximately 300nm to 750nm, for example. The second sensor unit 34 therefore, in the illustrated example comprises a camera. Image data from the camera 34 can be analysed, e.g. through the application of an object detection process or other appropriate image analysis method for obtaining a measure of a structural property of the crop material, for example, which may include a measure of a shape, size, length or the like of one or more crop material pieces. Other crop properties may include a measure of a colour of the crop material.

The present solution is not limited in respect of the specific crop properties which may be determined from the sensor data from the first and second sensor units 32, 34, as will be understood by the skilled reader. The above are provided as examples only for context.

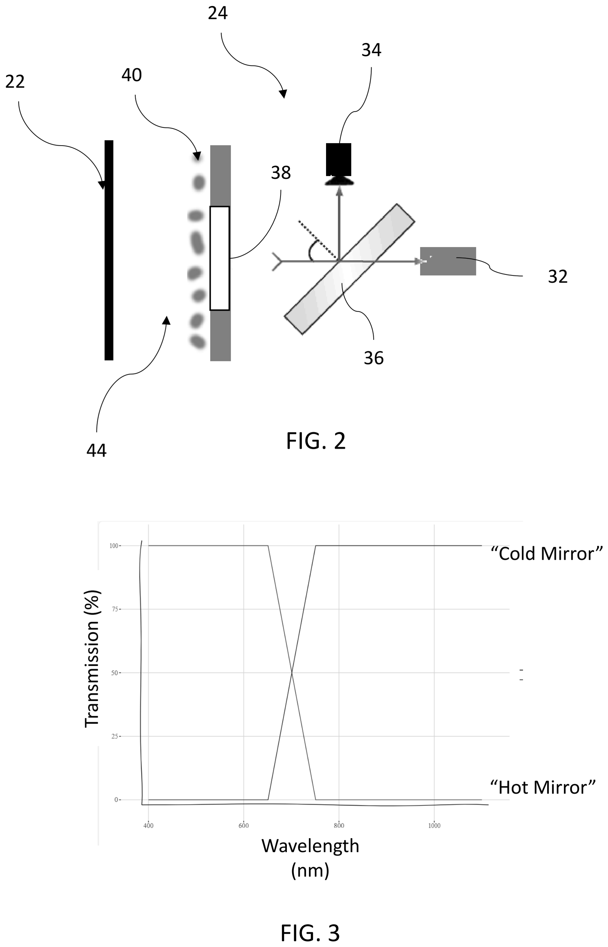

The sensor arrangement 24 advantageously incorporates an optical separator element in the form of a mirror 36 positioned in an optical path between a sensing region associated with a crop path 44 for crop material 40 processed by the forage harvester 2 and the sensor units 32, 34. In the illustrated embodiment, the mirror 36 comprises a cold mirror which is substantially transmissive to light in the first optical waveband, i.e. for light in the near infrared waveband, and substantially reflective for light in the second optical waveband - i.e. for visible light. This optical response for a cold mirror is illustrated graphically in FIG 3 for a given angle of incidence of 45 degrees. This figure also shows the optical response for a hot mirror under the same circumstances. Specifically, for the cold mirror, the mirror is substantially transmissive for light at or above approximately 780nm - i.e. including NIR light - but where the transmission percentage approaches 0% for light having a wavelength of less than approximately 750nm - i.e. including visible light). In this way, the mirror 36 is operable for directing (here transmitting) light in the first optical waveband - i.e. NIR light - in a first direction corresponding to a sensing axis of the first sensor unit 32 and directing light (here through reflection) in the second optical waveband - i.e. visible light - in a second direction which is angled with respect to the first direction which corresponds to a sensing axis of the second sensor unit 34, as is shown in FIG. 2.

It will be appreciated that the mirror 36 may in alternative embodiments comprise an optical element which is transmissive to light in the second optical waveband and reflective for light in the first optical waveband. Where equivalent sensor units 32, 34 are used, such an optical separator may comprise a "hot-mirror".

The sensor arrangement additionally incorporates a sensor window 38 which in effect serves as part of a wall defining the crop path through the unloading spout 22 of the harvester 2. The sensor window may typically be formed of a glass material such as sapphire glass for example, which may be resistant to scratching or other damage through contact with the crop material. The sensor window 38 is substantially transmissive to light in both the first and second wavebands. The present solution as illustrated here advantageously provides dual sensing means which may be used for monitoring multiple different properties of the crop material by imaging in two different optical wavebands. Providing the mirror 36 allows for the size of the sensor window 38 to be kept to a minimum, retaining or maximizing a structural integrity of the spout wall which may otherwise be compromised by the sensor window 38 itself, or indeed by the joins between the sensor window 38 and the walls of the unloading spout 22. The proposed solution additionally provides improvements (i.e. a reduction) in packaging requirements for the sensor arrangement 24.

### Control Unit

As an extension, the sensor arrangement 24 may comprise or may be communicably coupled/couplable with a control unit for processing sensing signals from the sensors units 32, 34. This may include analysing the received sensing signal(s) for determining one or more crop properties therefrom. This can include a first crop property determined from sensing signals from the first sensor unit 32, and/or a second crop property determined from sensing signals from the second sensor unit 34. Example properties are discussed herein. The control unit may also be operable, in use, to associate sensing signals from the first and second sensor units 32,34. This may include associating the sensing signals based on a timing thereof to, for example, associate a first crop property determined from the sensing signals from the first sensor unit 32 with a second crop property determined from the sensing signals from the second sensor unit 34. This may be particularly beneficial, in an example, for associating a given crop content measure (e.g. moisture) from the NIR data with a colour measure from the optical data from the camera 34.

### Alternative Embodiments

Whilst illustrated herein in the form of a sensor arrangement 24 operably mounted to an unloading spout 22 of forage harvester 2, the sensor arrangement 24 may be operably located at one or more further points on the forage harvester 2. This may include proximal to a crop pick up, processing unit or at the rear of the unloading spout, for example. Furthermore, the sensor arrangement 24 may be mounted on alternative harvesting machines, which may include a baler for example, with the sensor arrangement 24 mounted at or proximal to a crop pick up or baling chamber thereof. A further example harvesting machine may include a windrower, with the sensor arrangement 24 operably mounted at or proximal to a crop pick up or conditioner of the windrower, for example.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A crop material sensor arrangement for an agricultural harvesting machine, the crop material sensor arrangement comprising:
a first sensor unit operable for imaging in a first optical waveband;
a second sensor unit operable for imaging in a second optical waveband;
an optical separator element operable for directing light in the first optical waveband in a first direction and directing light in the second optical waveband in a second direction, where the first and second direction are angled with respect to one another;
wherein the optical separator element is positioned, in use, in an optical path between a sensing region associated with a crop path for crop material processed by the harvesting machine, and the first and second sensor units.

2. A crop material sensor arrangement as claimed in claim 1, wherein the first optical waveband comprises a range of wavelengths corresponding to light in a near infrared light spectrum (NIR).

3. A crop material sensor arrangement as claimed in claim 2, wherein the first sensor unit comprises an infrared sensor.

4. A crop material sensor arrangement as claimed in any preceding claim, wherein the second optical waveband comprises a range of wavelengths corresponding to light in a visible light spectrum; optionally wherein the second sensor unit comprises a camera.

5. A crop material sensor arrangement as claimed in any preceding claim, wherein the optical separator element comprises a mirror.

6. A crop material sensor arrangement of any preceding claim, wherein the optical separator element comprises a cold-mirror which is transmissive to light in the first optical waveband and reflective for light in the second optical waveband.

7. A crop material sensor arrangement of any of claims 1 to 5, wherein the optical separator element comprises a hot-mirror which is transmissive to light in the second optical waveband and reflective for light in the first optical waveband.

8. A crop material sensor arrangement of any preceding claim, comprising a sensor window which is positioned, in use, in an optical path between the sensing region and the optical separator.

9. A crop material sensor arrangement as claimed in any preceding claim, wherein the optical separator element is angled with respect to an orientation of the first and/or second sensor unit, the orientation of the first and/or second sensor unit being defined by a sensing axis, thereof.

10. A crop material sensor arrangement of any preceding claim, wherein the first and second sensor units are arranged such that respective sensing axes thereof are substantially perpendicular to one another; and wherein the optical separator element is advantageously angled with respect to said sensing axes at an angle of approximately 45 degrees, such that the first direction is substantially perpendicular to the second direction.

11. A crop material sensor arrangement of any preceding claim, comprising a control unit, including:
one or more receiver elements for receiving sensing signals from the first and/or second sensor units; and
one or controllers for analysing the received sensing signal(s).

12. A crop material sensor arrangement of claim 11, wherein the control unit is operable, in use, to analyse the received sensing signal(s) for determining one or more crop properties therefrom, which includes a first crop property determined from sensing signals from the first sensor unit, and/or a second crop property determined from sensing signals from the second sensor unit.

13. A crop material sensor arrangement of claim 12, wherein:
the first sensor unit comprises an infrared sensor and the first crop property includes any one or more of: a measure of a moisture content, dry matter content, protein content, starch content, sugar content and/or fiber content; and/or
the second sensor unit comprises a camera and the second crop property comprises a measure of a structural property of the crop material, and/or a measure of a colour of the crop material.

14. A crop material sensor arrangement of claim 11 or any claim dependent thereon where the control unit is operable, in use, to associate sensing signals from the first and second sensor units

15. An agricultural harvesting machine comprising the crop material sensor arrangement of any preceding claim; wherein the machine comprises a forage harvester and the crop material sensor arrangement or one or more components thereof are operably mounted to an unloading spout of the forage harvester.
